Europäisches Patentamt

European Patent Office

Office européen des brevets

(11) Publication number: **0 093 005**
**B1**

(12) **EUROPEAN PATENT SPECIFICATION**

(45) Date of publication of patent specification: **08.03.89**

(51) Int. Cl.⁴: **B 23 K 26/04**

(21) Application number: **83302327.8**

(22) Date of filing: **25.04.83**

(54) **Laser device.**

(30) Priority: **27.04.82 JP 71093/82**
**27.04.82 JP 71094/82**
**27.04.82 JP 71095/82**

(43) Date of publication of application:
**02.11.83 Bulletin 83/44**

(45) Publication of the grant of the patent:
**08.03.89 Bulletin 89/10**

(84) Designated Contracting States:
**DE FR GB SE**

(56) References cited:
**EP-A-0 048 410**
**DE-A-2 809 007**
**US-A-4 316 467**

**PATENTS ABSTRACTS OF JAPAN, vol. 8, no.
21 (E-224)1458r, 28th January 1984; & JP - A -
58 182 886 (NIHON SEKIGAISEN KOGYO K.K.)
25-10-1983**

(73) Proprietor: **SUMITOMO ELECTRIC INDUSTRIES
LIMITED**
**No. 15, Kitahama 5-chome Higashi-ku
Osaka-shi Osaka 541 (JP)**

(72) Inventor: **Takenaka, Shinya c/o Osaka Works
Sumitomo Elec.Ind.Ltd. No. 1-3, Shimaya 1-
chome
Konohana-ku Osaka (JP)**
Inventor: **Sunago, Katsuyoshi c/o Osaka Works
Sumitomo Elec.Ind.Ltd. No. 1-3, Shimaya 1-
chome
Konohana-ku Osaka (JP)**

(74) Representative: **Cooper, Derek Robert et al
Marks & Clerk Alpha Tower Suffolk Street
Queensway
Birmingham B1 1TT (GB)**

Courier Press, Leamington Spa, England.

## Description

### BACKGROUND OF THE INVENTION

This invention relates to laser devices in which a laser beam is led to a desired object by selectively using a mirror waveguide and a fiber waveguide, and, more particularly, to a laser device which includes a mechanism for selecting one of two waveguides, a mechanism for identifying a selected one of the two waveguides and a mechanism for obtaining the desired laser power at the output end.

A $CO_2$ gas laser has a number of oscillation lines in the range of far infrared rays, and the oscillation line at 10.6 μm provides the maximum output. Thus, the $CO_2$ gas laser, being high in the efficiency of conversion of electrical energy into optical energy, can provide high power even with continuous oscillation. Accordingly, the $CO_2$ gas laser is employed as a high efficiency, high power laser in a number of fields. The $CO_2$ gas laser has a wide range of application, for instance, as a laser machining device or as a laser medical treatment device.

Since the $CO_2$ gas laser beam cannot be seen, a visible light beam is employed as a guide light beam when it is required to apply the laser beam to an object. The guide light source may be a He-Ne laser.

The $CO_2$ gas laser operating light beam and the guide light beam are output with the optical axes of these beams coincided.

Heretofore, a mirror waveguide has been employed in order to direct the $CO_2$ gas laser operating light beam.

The mirror waveguide is made up of a suitable number of pipes which are rotatably coupled to one another, and mirrors provided at the joints of the pipes. Therefore, the laser beam is transmitted while being repeatedly reflected by the mirrors.

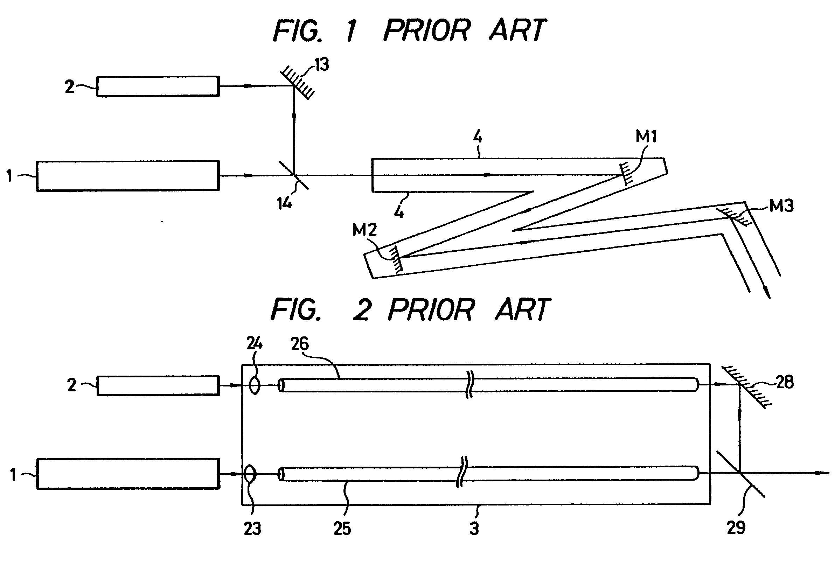

Fig. 1 is an explanatory diagram outlining the optical system of a conventional laser device with a mirror waveguide.

In Fig. 1, the operating light source 1 is a high powered infrared laser such as a $CO_2$ gas laser, and a guide light source 2 generates visible rays. The operating light beam cannot be seen. Therefore, the guide light beam is laid on the operation light beam so that the direction of the operating light beam can be seen by the operator. More specifically, the guide light beam and the operating light beam are put together by mirrors 13 and 14 in such a manner that the optical axis of the former is laid on that of the latter.

The operating light beam is reflected by mirrors M1, M2, M3, and so forth so that it is led in a desired direction and to a desired point. These mirrors, the pipes and the mechanism for operating the joints form the mirror waveguide 4.

Such a mirror waveguide has been put in practical use.

The light transmitting medium in the mirror waveguide is air. Therefore, even infrared rays are scarcely attenuated during transmission.

Coherency, which is one of the features of a laser beam, is maintained unchanged. A laser beam can be collected as desired by the use of a lens at the exit of the waveguide. That is, the operating light beam can be concentrated on one point of an object under operation.

Because of these advantages, the mirror waveguide is extensively employed to transmit far infrared rays.

However, the mirror waveguide is disadvantageous in the following points: since the path is made up of a number of pipes, mirrors and joints in combination it is bulky, thus requiring a larger space in operation.

The mirror waveguide is disadvantageous especially in that the degree of freedom in motion is small; that is, the path is not flexible.

The pipes cannot always turn around the respective joints. With respect to the normal to each mirror, the incidence angle is equal to the reflection angle. The pipes must be extended in the direction of incidence and in the direction of reflection. Thus, the pipes are limited in motion.

A fiber wave-conducting path employs an optical fiber to transmit light. A fiber which scarcely attenuates visible rays and near infrared rays during transsission is available. The fiber waveguide has been extensively employed to transmit visible rays and near infrared rays.

However, an optical fiber which can sufficiently transmit far infrared rays, such as those from a $CO_2$ gas laser, without attenuation, has not yet been provided.

An optical fiber for far infrared rays is being actively developed. Some laser knives employ a fiber waveguide system as shown in Fig. 2.

In Fig. 2, the operating light source 1 is a $CO_2$ gas laser, and the guide light source 2 is a He-Ne laser.

The operating light beam and the guide light beam from these light sources are applied though an operating light beam coupling lens 23 and a guide light beam coupling lens 24 to an operating light beam fiber 25 and a guide light beam fiber 26, respectively.

These fibers 25 and 26 form a fiber waveguide 3.

The guide light beam exits from the guide light beam fiber 26, and is then laid on the operating light beam by means of mirrors 28 and 29.

The operating light beam is considerably different from the guide light beam in wavelength. No optical fiber is available which avoids attenuation of both of the light beams during transmission. Accordingly, two different optical fibers are employed in the fiber waveguide.

The fiber waveguide is flexible because its optical fibers are flexible. It can be bent freely so that it can be brought freely to an object. Accordingly, the space occupied by the path is relatively small, and the path can be readily handled in a small space.

This fiber waveguide is advantageous as described above; however, it is still disdvantageous in the following points.

The most serious drawback of the fiber waveguide is that the optical fiber has a low transmission factor for infrared rays. Therefore, it cannot transmit a large amount of energy. Thus, the fiber waveguide is not useful for a mechanical processing operation requring high laser power. Furthermore, the optical fiber is low in durability.

When a laser beam is transmitted through an optical fiber, its coherency is lost. Therefore, the laser beam cannot be sufficiently concentrated even with a lens provided at the exit of the fiber waveguide.

Thus, the mirror waveguide and fiber waveguide are each advantageous in one aspect, but disadvantageous is another aspect; that is, it cannot be said that one of the two waveguides is superior to the other.

As is apparent from the above description, the mirror waveguide and the fiber waveguide are each advantageous in one aspect but disadvantageous in another aspect. Accordingly, it is desirable to selectively use the two waveguides according to the purposes of use and the circumstances involved.

A laser device using both a mirror waveguide and a fiber waveguide has not been proposed in the art.

However, a device having both a mirror wavegide and a fiber waveguide must solve the following problem:

That is, the two waveguides are different in the transmission factor $\eta$. The transmission factor of the mirror waveguide is about 0.9, while that of the fiber waveguide is about 0.5. These transmission efficiencies are, in general, as described above, although they depend on the employed waveguide lengths.

If the laser outputs are the same, then the amounts of energy at the exits of the waveguides are different because the amounts of energy lost during transmission are different. That is, the operating powers applied during irradiation are different.

What is actually required by the user is that the laser operating power can be specified when the laser beam is to be applied to an object. Even if the laser output power Po is known, however, it is impossible to immediately know the operating power Pw, because loss is caused during transmission.

The transmission power Pw is the product of the laser output power Po and the transmission factor $\eta$:

$$Pw = \eta Po$$

For instance when it is required to provide an operating power of 50 W at the end of the waveguide, the laser output power should be 56 W in the case of the mirror waveguide and 100 W in the case of the fiber waveguide.

If a device had both a mirror waveguide and a fiber waveguide, it would be convenient, as described above. However, if the operating power Pw changes when the two waveguides are switched it is not convenient. That is, the power of the light beam at the end of the waveguide must be repeatedly measured. This is undoubtedly troublesome.

SUMMARY OF THE INVENTION

In view of the foregoing, an object of this invention is to provide a laser device which comprises a mirror waveguide and a fiber waveguide, and particularly, a switching mechanism for selecting the mirror waveguide or the fiber waveguide, a mechanism for automatically identifying a selected one of the two waveguides, and a mechanism for controlling the laser power so as to provide an output power P0 which is calculated from the transmission factors $\eta m$ and $\eta f$ of the waveguides and a desired waveguide end output (operating power) Pw.

Where the mirror waveguide is selected, the power Pm at the waveguide end is:

$$Pm = \eta m\ Po$$

Therefore, the laser output power Po is determined from a desired operating power Pw so as to meet the following expression:

$$Po = Pw/\eta m$$

In this case,

$$Pm = Pw$$

BRIEF DESCRIPTION OF THE DRAWINGS

Fig. 1 is an explanatory diagram showing a conventional laser device using a mirror waveguide;

Fig. 2 is an explanatory diagram showing a conventional laser device using a fiber waveguide;

Fig. 3 is an explanatory diagram outlining the arrangement of a laser device according to one embodiment of this invention;

Fig. 4 is an explanatory diagram outlining a selection mechanism of a laser device according to this invention;

Fig. 5 is an explanatory diagram showing one modification of the selecting mechanism of Fig. 4;

Fig. 6 is an explanatory diagram showing another modification of the selecting mechanism in Fig. 4;

Figs. 7 and 8 are explanatory diagrams outlining the arrangement of a laser device according to the invention which is capable of distinguishing the waveguide used; and

Fig. 9 is an explanatory diagram outlining the arrangement of a laser device according to the invention which employs a single guide light source.

DETAILED DESCRIPTION OF THE PREFERRED EMBODIMENTS

The invention will now be described in detail, with reference to the drawings showing various embodiments thereof.

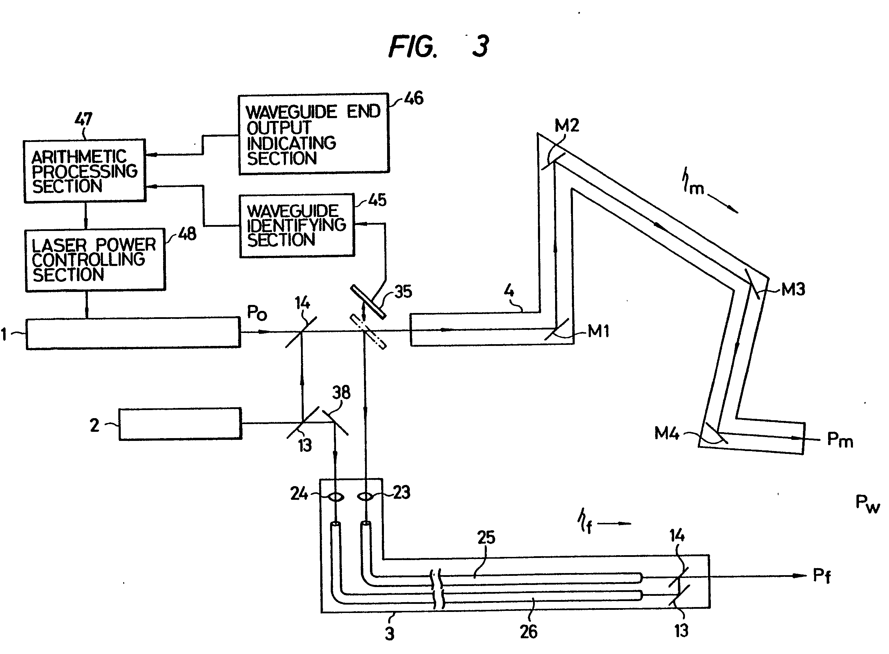

Fig. 3 is an explanatory diagram outlining the arrangement of a laser device according to a first embodiment of the invention.

As shown in Fig. 3, an operating light source 1 for generating high powered infrared rays such as a $CO_2$ gas laser is provided, along with a guide light source 2 for generating visible rays, such as a He-Ne laser.

In order to direct the operating light beam and the guide light beam, a mirror waveguide 4 and a fiber waveguide 3 are provided. A switching mirror 35 is displaced to selectively employ the two waveguides.

The mirror waveguide 4 is a conventional apparatus which comprises a suitable number of pipes, joints through which the pipes are coupled to one another, and mirrors M1, M2, M3 and so forth at the joints.

In the use of the mirror waveguide 4, the optical axis of the guide light beam is made to coincide with that of the operating light beam by means of a beam splitter 13 and a selective transmission mirror 14.

The two light beams thus arranged are applied to the mirror waveguide 4.

When the switching mirror 35 is moved to the position indicated by the chain line, the light beam is applied to the fiber waveguide 3.

The operating light beam is applied through an operating light beam coupling lens 23 to an operating light beam fiber 25.

The guide light beam is reflected by a mirror 38 and is applied through a guide light beam coupling lens 24 to a guide light beam fiber 26.

No available optical fiber can transmit both the operating light beam and the guide light beam with low attenuation. Therefore, two different fibers are utilized.

A waveguide identifying section 45 is provided in order to identify the selected one of the two waveguides. The switching mirror 35 is switched; i.e., moved in parallel or rotated. Therefore, the selected waveguide can be identified by detecting the displacement of the switching mirror 35.

A waveguide end output indicating section 46 operates to indicate the laser power Pw at the exit of the waveguide, which is required for operation. The indication is made by the operator.

An arithmetic processing section 47 operates to perform a calculation as to what the laser output power Po should be in order to obtain an operating laser power Pw.

For obtaining the laser output power Po from the operating power Pw, different equations are employed for different waveguides. The selected waveguide can be identified by an identifying signal from the waveguide identifying section 45.

More specifically, simple proportional expressions are used:

(1) In the case of the mirror waveguide:

$$Po = Pw/\eta m \qquad (1)$$

where $\eta m$ is the transmission factor of the mirror waveguide.

(2) In the case of the fiber waveguide:

$$Po = Pw/\eta f \qquad (2)$$

where $\eta f$ is the transmission factor of the fiber waveguide.

Sometimes, expressions (1) and (2) may include small correction terms; however, the laser output powers Po are, in general, provided by expressions (1) and (2).

The arithmetic procession section 47 applies an instruction signal to a laser output control section 48, so that the latter controls the voltage and gas pressure applied to the operating light source 1 so as to obtain the specified laser output power Po.

A desired laser output power Po can be obtained by controlling the voltage and gas pressure. In this case, laser output powers Po are related to parameters such as voltage and gas pressure, so that the necessary parameters may be set for a desired power P.

Furthermore, an automatic control system may be employed in which means for detecting the laser output power Po is employed and parameters such as voltage and gas pressure are automatically controlled so that the difference between a target value and the measured value is decreased.

The operation of the laser device thus constructed will now be described.

First, the operator selects the mirror waveguide or the fiber waveguide according to the dimensions and configuration of an object under operation and other considerations, by operating the switching mirror 35.

The operating power required for operation is applied to the waveguide and output indicating section 46. The waveguide identifying section 45 identifies the selected waveguide, while the arithmetic processing section 47 calculates a laser output power Po for the waveguide from the operating power Pw.

The laser output control section 48 controls the operating light source 1 to provide the laser output power Po thus calculated. The laser output power Po from the light source is attenuated, corresponding to the transmission factor, to the predetermined operating power Pw at the exit of the waveguide.

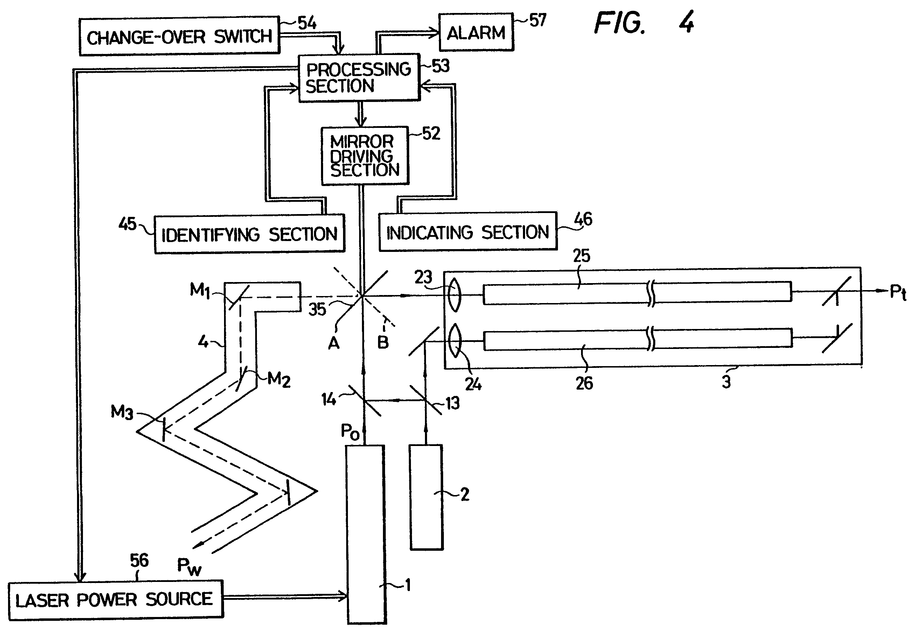

Fig. 4 is an explanatory diagram outlining the arrangement of a first example of a selecting mechanism according to the invention.

A movable mirror 35, which is rotatable, is disposed on the optical axis of the operating light beam.

The movable mirror 35 is driven by a mirror driving section 52, so that it may be selectively set at two fixed positions A and B about the mirror axis.

When the movable mirror 35 is set at the position A (indicated by the solid line), the operating light beam is reflected by the mirror 35 and is then applied through the operating light beam coupling lens 23 to the operating light beam fiber 25.

When the movable mirror 35 is set at the position B (indicated by the broken line in Fig. 4), the operating light beam is applied to the mirror waveguide 4.

A processing section 53 receives a change-over instruction signal from a change-over switch 54, to operate the mirror driving section 52. The processing section 53 further receives a detection signal from an identifying section 45, to determine whether laser power source 56 should be excited or not.

The identifying section 45 is for detecting the state of the movable mirror. The movable mirror 35 has the following three states:

(1) The mirror 35 is at position A — the operating light beam is applied to the fiber waveguide.

(2) The mirror 35 is at position B — the operating light beam is applied to the mirror waveguide.

(3) The mirror 35 is set between positions A and B — the operating light beam is not applied to either of the two waveguides.

The identifying section 45 optically, magnetically or mechanically detects the rotational angle of the rotary shaft of the movable mirror 35, to detect the state of the movable mirror.

The detection signal is applied to the processing section 53. The processing section operates to start the laser power source 56 only when the movable mirror 35 is at the position A or B. When the mirror 35 is set between the positions A and B, the source 56 is not started and the operating light source is not excited.

The transmission time required for the movable mirror 35 to move the position B from the position A or to the position A from the position B is very short, being determined by the mirror driving section 52.

When the transmission time exceeds a certain value, it is determined that a problem has occurred, and an alarm unit 57 is operated.

The operation of the laser device thus constructed will now be described.

It is assumed that the movable mirror 35 is set at the position A and the operating light beam is applied to the fiber waveguide.

When the change-over switch 54 is operated to select the mirror waveguide, the change-over instruction signal is applied to the processing section 53. The processing section 53 deenergizes the laser power souurce 56 and operates the mirror driving section 52 to turn the movable mirror 41. The identifying section 45 detects the fact that the movable mirror 35 is between the positions A and B and transmits a corresponding detection signal to the processing section 53. The processing section 53 continuously operates the mirror driving section 52, and maintains the laser power source 56 non-excited.

Soon the rotation of the movable mirror 35 is stopped, and the identifying section 45 detects when the movable mirror is stopped at position B. Upon reception of a change-over completion confirmation signal from the identifying section 45, the processing section 53 stops the operation of the mirror driving section 52 and excites the laser power source 56. As a result, the operating light source is again activated, so that the operating light beam propagates in the mirror waveguide.

When the movable mirror switching operation is not accomplished within a predetermined switching period after the change-over switch 54 has been operated, the alarm unit 57 is operated to inform the operator of the occurrence of a problem. The mirror driving section 52 has become out of order and the rotation of the mirror has been suspended. In this case, the mirror driving section should be inspected and repaired.

In the above-described embodiment, the selecting mechanism for selecting either the mirror waveguide or the fiber waveguide is a rotary mirror; however, it should be noted that the invention is not limited thereto or thereby.

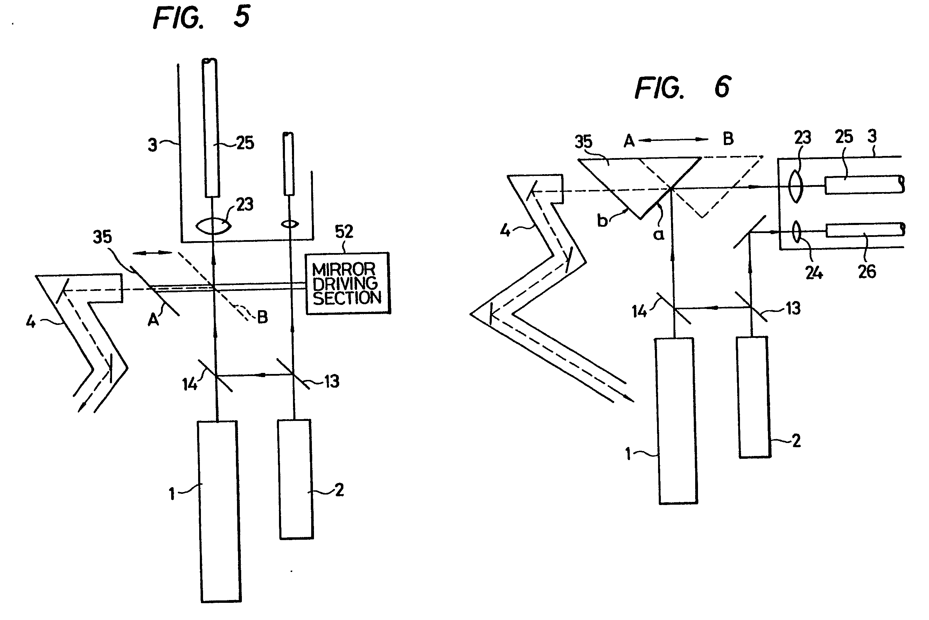

Fig. 5 is an explanatory diagram showing one modification of the selecting mechanism. In this modification, the movable mirror 35 is moved in parallel by a mirror driving section 52. When the mirror 35 is set at the position A, the operating light beam is applied to the fiber waveguide 3; and when it is set at the position B, the operating light beam is applied to the mirror waveguide 4.

Fig. 6 is an explanatory diagram showing another modification of the selecting mechanism. In this modification, the movable mirror 25 has two reflecting surfaces a and b and is movable in a direction perpendicular to the optical axis of the operating light beam. When the reflecting surface a intersects the optical axis of the operating light beam (or when the mirror 35 is at the position A), the operating light beam is applied to the fiber waveguide 3; and when the reflecting surface b intersects the optical axis of the operating light beam (or when the mirror 35 is at the position B), the operating light beam is applied to the mirror waveguide 4.

In the above-described cases, the mirror is moved to select a desired waveguide. However, the laser device may be designed so that the two waveguides themselves are moved so that a selected one is aligned with the optical axis of the operating light beam. Any of the above-described selecting mechanism may be employed in the invention.

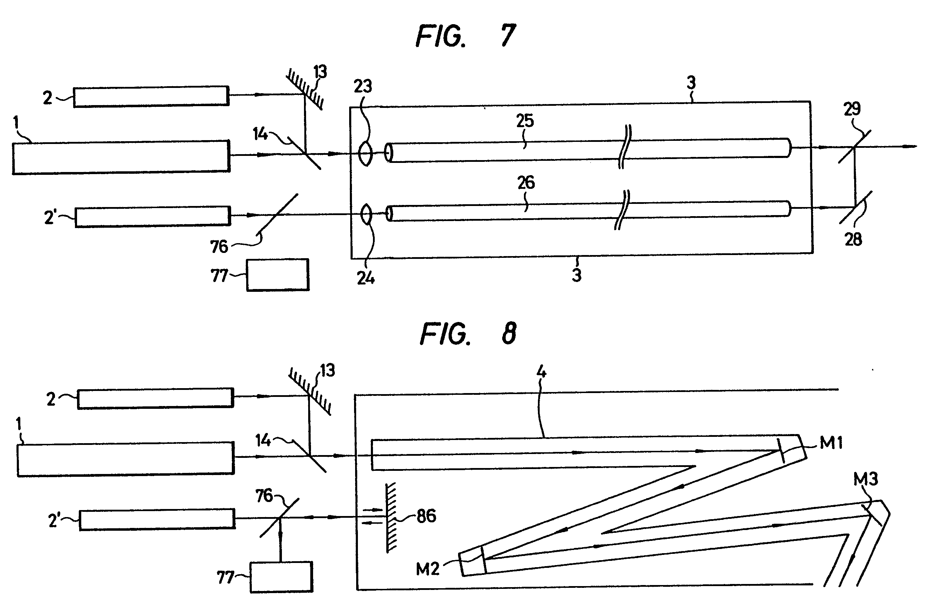

Figs. 7 and 8 are explanatory diagrams outlining the arrangement of one example of a mechanism for identifying which of the two waveguides is being employed.

In this example, two guide light sources are employed: a mirror waveguide guide light source 2 and a fiber waveguide guide light source 2'.

A guide light beam from the guide light source 2 is combined with the operating light beam by means of mirrors 13 and 14 in a manner such that the optical axes of these beams coincide.

The mirror waveguide guide light beam is used as a guide light beam when the mirror waveguide is used. When the fiber waveguide is used, this guide light beam together with the operating light beam are applied to the fiber and serve as a target in adjusting the optical fiber.

A beam splitter 76 is provided ahead of the fiber waveguide guide light source 2', and a detector 77 for detecting the guide light beam is provided beside the beam splitter 76.

An operating light beam fiber 25 for transmitting infrared rays and a guide light beam fiber 26 for transmitting visible rays form a fiber waveguide 3.

An operating light beam coupling lens 23 and a guide light beam coupling lens 24 are provided immediately before the fibers 25 and 26, respectively.

The fiber waveguide guide light beam exits the guide light beam fiber 26 and is then put together with the operating light beam by means of mirrors 28 and 29 so optical axes of these light beams coincide.

When the fiber waveguide 3 is placed in front of the light sources and is used, almost all the laser beam from the fiber waveguide guide light source 2' enters the guide light beam fiber 26, propagates therein and comes out of the fiber 26. No guide light beam is applied to the detector 77. The detector 77 is made up of a suitable light receiving element such as a photo-diode or a photo-transistor. When the fiber waveguide is used, therefore, no guide light beam is applied to the detector 77, and therefore the output of the latter is substantially zero.

Fig. 8 shows the arrangement when the mirror waveguide is employed.

The mirror waveguide light beam is reflected by the mirrors 13 and 14 so as to be put together with the operating light beam. Thus, the guide light beam together with the operating light beam advance in the mirror waveguide while being repeatedly reflected by the mirror.

In this case, no optical fiber is provided on the optical axis of the fiber waveguide guide light source 2', the instead a reflecting plate 86 is provided. The guide light beam goes through the beam splitter 76 to the reflecting plate 86, where it is reflected. The guide light beam thus reflected is further reflected by the beam splitter, as a result of which it enters the detector 77. Therefore, the detector 77 provides an output voltage.

When the fiber waveguide is used, the output of the detector is substantially zero (0). When the mirror waveguide is used, the detector 77 provides a significant output other than zero.

Thus, the selected waveguide can be positively detected.

When the fiber waveguide is used, light enters the detector 17, being reflected from the lens or the fiber end face; however, the amount of source light entering the detector is very small, not more than a few percent. When the mirror waveguide is used, the reflecting plate 86 may be a mirror or a metal plate. in this case, the amount of reflected light can be readily increased to 90% or more.

The amount of light respecting applied to the detector is thus made to vary greatly. Therefore, the two conditions can be clearly distinguished from one another.

The above-described arrangement may be modified such that the laser device is arranged so that when the mirror waveguide is used, no reflecting plate 86, etc. is provided in the optical path of the fiber waveguide guide light beam, and on the other hand, when the fiber waveguide is used, light is reflected by the lens and the fiber end face, and the detector accordingly provides a small output. This method is effective when a relatively large amount of light is reflected from the fiber end face.

The laser device is designed so that, when the two different waveguides are used, different amounts of reflected guide light beam are detected, respectively, as described above. Thus, the selected waveguide can be positively identified.

In the above-described example, a DC signal is subjected to comparison. Therefore, when external light enters the detector 77, the S/N ratio may be decreased. The effect of external light may however be eliminated by employing a method in which a chopper is provided in the optical path of the guide light beam in a manner such that it turns at a predetermined speed so that the guide light beam is subjected to amplitude-modulation at a certain frequency.

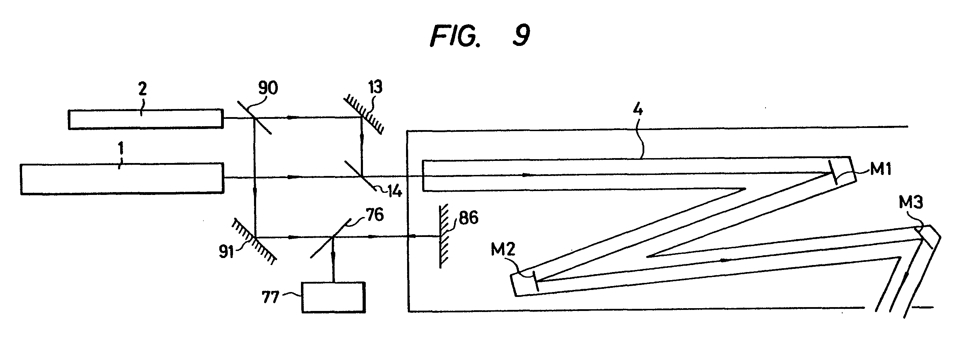

In the above-described example, two guide light sources are employed; however, the laser device may be modified so as to employ only one guide light source, as shown in Fig. 9.

In Fig. 9, a beam splitter 90 is provided ahead of the guide light source 2, so as to split the guide light beam into two parts. The first part, or the light beam passed through the beam splitter 90, serves as a guide light beam in the mirror waveguide. The second part, or the light beam reflected by the beam splitter 90, is further reflected by a mirror 91, so as to be used as a fiber waveguide guide light beam.

The remainder of the arrangement is similar to that of the first example shown in Figs. 7 and 8.

As is apparent from the above description, a laser device in which a fiber waveguide and a mirror waveguide are selectively used to transmit the operating light beam and the guide light beam; and an automatic identifying mechanism identifies the selected waveguide, to provide a device of improved utility and effectiveness.

The laser device according to the invention affords the following beneficial effects:

(1) The laser device of the invention has two different waveguides which can be used selectively. Of the two waveguides, the best one can be selected according to the circumstances and the position and dimensions of the object to which the laser beam should be applied. Thus, the laser device can be used for a plurality of purposes.

(2) As the power Pw of the operating light beam at the exit of the waveguide can be specified, the desired power can be readily obtained. Thus, operations can be carried out safely, positively and quickly.

(3) When one of the two waveguides is selected, the laser output power Po is automatically controlled with the operating power Pw set to a desired value. Thus, the laser device according to the invention can be applied to a laser medical treatment device, a laser machining device, or the like.

The transmission factor ηm of the mirror waveguide and the transmission factor ηf of the fiber waveguide change; however, the amounts of change are very small, not more than a few percent with age. Thus, the laser beam can be applied to an object with a specified operating power within a range of error of a few percent.

(4) The completion of a change-over operation can be detected by the provision of a detecting section adapted to detect the states of a selecting mechanism, and therefore the laser device may be operated safely and positively.

(5) The change-over operation may be detected optically. Therefore, it is unnecessary to provide an electrical circuit near the waveguides, and no trouble due to unsatisfactory insulation is caused.

## Claims

1. A laser device having an operating light source (1) in the form of an infrared laser, a guide light source (2) in the form of a visible laser, and a waveguide system for guiding light beams from the two lasers to an operating location, charcterised in that the waveguide system comprises a mirror waveguide (4) and a fiber waveguide (3) which are selectively employed.

2. A laser device as claimed in claim 1, further comprising control means (48) which controls the output power (Po) of the operating light source (1) in accordance with the known transmission factor of each waveguide (3, 4), so that the power (Pw) at the operating location of the light beam from the operating light source (1) remains constant regardless of which waveguide (3, 4) is employed.

3. A laser device as claimed in claim 1 or 2, wherein the fibre waveguide comprises a pair of fibre guides (25, 26) through which the light beams from the two light sources (1, 2) are respectively transmitted, and a selecting mechanism (35, 45) is operable either to direct both of said light beams coincidently through the mirror waveguide (4) or to direct the light beams through the fibre guides (25, 26) respectively.

4. A laser device as claimed in claim 3, wherein the selecting mechanism includes a reflector (35) which is movable between a first position wherein the light beam from the operating light source is deflected towards or allowed to pass to the mirror waveguide (4), and a second position wherein said light beam is deflected towards or allowed to pass to the respective fibre guide (25).

5. A laser device as claimed in claim 4, wherein the reflector (35) is linearly moved between its first and second positions.

6. A laser device as claimed in claim 4, wherein the reflector (35) is angularly movable between its first and second positions.

7. A laser device as claimed in claim 4, 5 or 6, further comprising means operative to detect when the reflector (35) fails to move between its first and second positions within a predetermined time period, and alarm means (57) which is activated in response to such detection.

8. A laser device as claimed in any preceding claim, further comprising identifying means (45) operative to determine which of the two waveguides (3, 4) has been selected.

9. A laser device as claimed in claim 8, wherein the identifying means includes an optical detector (77) and means (86) for reflecting a portion of the light beam from the guide light source (2) onto the detector (77), said portion being different for the two waveguides (3, 4).

10. A laser device as claimed in claim 8 when appended to claim 3, wherein the identifying means includes an optical detector (77) and a reflector (86) which, when the mirror waveguide (4) has been selected, reflects onto the detector (77) the light beam from the guide light source (2) which would otherwise have been directed through the respective fibre guide (26).

## Patentansprüche

1. Laservorrichtung mit einer Betriebslichtquelle (1) in Form eines Infrarotlasers, einer Führungslichtquelle (2) in Form eines sichtbaren Lasers und einem Wellenleitersystem zum Führen von Lichtstrahlen von den zwei Lasern zu einer Betriebsstelle, dadurch gekennzeichnet, daß das Wellenleitersystem einen Spiegelwellenleiter (4) und einen Faserwellenleiter (3) aufweist, die selektiv verwendet werden.

2. Laservorrichtung nach Anspruch 1, weiterhin enthaltend eine Steuereinrichtung (48), die die Ausgangsleistung (Po) der Betriebslichtquelle (1) in Übereinstimmung mit dem bekannten Übertragungsfaktor eines jeden Wellenleiters (3, 4) derart beeinflußt, daß die Leistung (Bw) am Betriebsort des Lichtstrahls von der Betriebslichtquelle (1) ohne Rücksicht auf den verwendet Wellenleiter (3, 4) konstant bleibt.

3. Laservorrichtung nach Anspruch 1 oder 2, bei der der Faserwellenleiter ein Paar Faserleitungen (25, 26) aufweist, durch die die Lichtstrahlen von den zwei Lichtquellen (1, 2) jeweils übertragen werden, und ein Wählmechanismus (35, 45) aktivierbar ist, um entweder beide Lichtstrahlen koinzident durch den Spiegelwellenleiter (4) zu leiten oder die Lichtstrahlen jeweils durch die Faserleitungen (25, 26) zu leiten.

4. Laservorrichtung nach Anspruch 3, bei der der Wählmechanismus einen Reflektor (35) aufweist, der zwischen einer ersten Stellung, in der der Lichtstrahl von der Betriebslichtquelle auf den Spiegelwellenleiter abgelenkt wird oder erlaubt wird, durch diesen zu passieren, und einer zweiten Stellung, in der der lichtstrahl gegen die jeweilige Faserleitung (25) abgelenkt wird oder erlaubt wird, durch sie zu passieren, bewegbar ist.

5. Laservorrichtung nach Anspruch 4, bei der der Reflektor (35) linear zwischern seinen ersten und zweiten Stellungen bewegbar ist.

6. Laservorrichtung nach Anspruch 4, bei der der Reflektor (35) zwischen seinen ersten und zweiten Stellungen winkelmäßig bewegbar ist.

7. Laservorrichtung nach den Ansprüchen 4, 5 oder 6, weiterhin enthaltend eine Einrichtung zur Ermittlung, wenn der Reflektor (35) versäumt, sich zwischen seinen ersten und zweiten Stellungen innerhalb einer vorbestimmten Zeitdauer zu bewegen, und eine Alarmeinrichtung (57), die in Abhängigkeit von einer solchen Ermittlung aktiviert wird.

8. Laservorrichtung nach einem der vorhergehenden Ansprüche, weiterhin enthaltend eine Identifizierungsrichtung (45) zur Ermittlung, welche der zwei Wellenleitungen (3, 4) ausgewählt worden ist.

9. Laservorrichtung nach Anspruch 8, bei der die Identifizierungseinrichtung einen optischen Detektor (77) und eine Einrichtung (86) zum Ablenken eines Teiles des Lichtstrahls von der Führungslichtquelle (2) auf den Detektor (77) aufweist, wobei jener Teil für die zwei Wellenleitungen (3, 4) verschieden ist.

10. Laservorrichtung nach Anspruch 8, wenn abhängig von Anspruch 3, bei der die Identifizierungseinrichtung einen optischen Detektor (77) und einen Reflektor (86) enthält, der, wenn der Spiegelwellenleiter (4) ausgewählt worden ist, den Lichtstrahl von der Führungslichtquelle auf den Detektor (77) richtet, der ansonsten durch die jeweilige Faserleitung (26) gerichtet würde.

**Revendications**

1. Dispositif à lasers ayant une source lumineuse de travail (1) sous forme d'un laser infrarouge, une source lumineuse de guidage (2) sous forme d'un laser visible, et un système de guidage d'onde destiné à guider les faisceaux lumineux des deux lasers à un emplacement de travail, caractérisé en ce que le système de guidage d'onde comporte un guide d'onde à miroirs (4) et un guide d'onde à fibres (3) qui sont utilisés sélectivement.

2. Dispositif à lasers selon la revendication 1, comprenant en outre un dispositif de réglage (48) qui règle la puissance de sortie (Po) de la source lumineuse de travail (1) d'après le facteur connu de transmission de chaque guide d'onde (3, 4) afin que la puissance (Pw) à l'emplacement de travail du faisceau lumineux provenant de la source de lumière de travail (1) reste constante quel que soit le guide d'onde (3, 4) qui est utilisé.

3. Dispositif à lasers selon la revendication 1 ou 2, dans lequel le guide d'onde à fibres comporte deux guides à fibre (25, 26) dans lesquels les faisceaux lumineux des deux sources lumineuses (1, 2) sont transmis respectivement, et un mécanisme de sélection (35, 45) est destiné à diriger soit les deux faisceaux lumineux en coïncidence dans le guide d'onde à miroirs (4) soit à diriger les faisceaux lumineux dans les guides à fibres (25, 26) respectivement.

4. Dispositif à lasers selon la revendication 3, dans lequel le mécanisme de sélection comporte un réflecteur (35) qui est mobile entre une première position dans laquelle le faisceau lumineux provenant de la source lumineuse de travail est dévié vers le guide d'onde à miroirs (4) ou peut passer vers ce guide d'onde, et une seconde position dans laquelle le faisceau lumineux est dévié vers le guide à fibre respectif (25) ou peut passer vers ce guide.

5. Dispositif à lasers selon la revendication 4, dans lequel le réflecteur (35) est mobile linéairement entre sa première et sa seconde position.

6. Dispositif à lasers selon la revendication 4, dans lequel le réflecteur (35) est mobile angulairement entre sa première et sa seconde position.

7. Dispositif à lasers selon la revendication 4, 5 ou 6, comprenant en outre un dispositif destiné à détecter si le réflecteur (35) ne se déplace pas entre sa première et sa seconde position pendant une période prédéterminée, et un dispositif d'alarme (57) qui est commandé à la suite de cette détection.

8. Dispositif à lasers selon l'une quelconque des revendications précédentes, comprenant en outre un dispositif d'identification (45) destiné à déterminer lequel des deux guides d'onde (3, 4) a été choisi.

9. Dispositif à lasers selon la revendication 8, dans lequel le dispositif d'identification comporte un détecteur optique (77) et un dispositif (86) destiné à réfléchir une partie du faisceau lumineux de la source de lumière de guidage (2) sur le détecteur (77), cette partie étant différente pour les deux guides d'onde (3, 4).

10. Dispositif à lasers selon la revendication 8 lorsqu'elle dépend de la revendication 3, dans lequel le dispositif d'identification comporte un détecteur optique (77) et un réflecteur (86) qui, lorsque le guide d'onde à miroirs (4) a été sélectionné, réfléchit vers le détecteur (77) le faisceau lumineux provenant de la source de lumière de guidage (2) qui aurait autrement été dirigé par le guide à fibre respectif (26).

FIG. 1 PRIOR ART

FIG. 2 PRIOR ART

FIG. 3

FIG. 4

CHANGE-OVER SWITCH 54

ALARM 57

PROCESSING SECTION 53

MIRROR DRIVING SECTION 52

45 IDENTIFYING SECTION

INDICATING SECTION 46

M₁

35

A B

23

25

Pt

4

M₂

M₃

24

26

3

14

13

Po

56

Pw

2

LASER POWER SOURCE

1

EP 0 093 005 B1

FIG. 5

FIG. 6

MIRROR DRIVING SECTION

EP 0 093 005 B1

EP 0 093 005 B1

## FIG. 7

## FIG. 8

FIG. 9